# EUROPEAN PATENT SPECIFICATION

(11) **EP 2 366 875 B1**
(45) Date of publication and mention of the grant of the patent: **24.10.2012**
(21) Application number: 11156637.8
(22) Date of filing: 02.03.2011
(51) Int. Cl.: F01N 3/00, F01N 13/00

(54) **Muffler draining apparatus for working machine**
Dämpferentleerungsvorrichtung für Baumaschine
Appareil de drainage de silencieux pour engin de chantier

(30) Priority: 11.03.2010 JP 2010054883
(43) Date of publication of application: 21.09.2011
(73) Proprietor: Hitachi Construction Machinery Co., Ltd., Bunkyo-ku, Tokyo 112-8563 (JP)
(72) Inventor: Saito, Tomoyuki, Tsuchiura-shi Ibaraki 300-0013 (JP); Abe, Toshihiro, Tsuchiura-shi Ibaraki 300-0013 (JP); Sugawara, Hiroki, Tsuchiura-shi Ibaraki 300-0013 (JP); Hiramatsu, Hidefumi, Tsuchiura-shi Ibaraki 300-0013 (JP); Kamata, Hiroyuki, Tsuchiura-shi Ibaraki 300-0013 (JP)
(74) Representative: Jansen, Cornelis Marinus

(56) References cited:
- WO-A1-2009/128969
- GB-A- 2 148 390

## Description

### BACKGROUND OF THE INVENTION

### (1) Field of the Invention

This invention relates to a muffler draining apparatus for a working machine which has a drain line that discharges water accumulated in a muffler equipped to the working machine to the outside of a vehicle body.

### (2) Description of the Related Art

An example of the related art of this kind is disclosed in JP-U-H04-24623. In this related art, a single discharge hose forming a drain line that discharges water accumulated in the muffler to the outside of the vehicle body is connected to the muffler. The discharge hose is generally formed by a rubber hose. In other words, in the related art disclosed in JP-U-H04-24623, the upper end of a single rubber hose is coupled to the lower part of the muffler, the entire rubber hose is made to hang down, and water accumulated at the bottom in the muffler is guided to the rubber hose, thereby causing the water to flow down to the outside of the vehicle body from the lower end of the rubber hose.

### SUMMARY OF THE INVENTION

In the case where the drain line is formed by a rubber hose as in the related art disclosed in JP-U-H04-24623 described above, the temperature of exhaust gas guided to the muffler is high. Thus, the temperature of heat radiated from the muffler is high, making the rubber hose susceptible to degradation due to the heat radiated from the muffler, which presents a problem in terms of durability. To address this problem, it is conceivable to form the drain line by a metal tubing which is highly resistant to high temperature environments. However, various kinds of devices/equipment are usually provided at the position below the muffler. For example, in the case where the working machine is a hydraulic excavator, a hydraulic pump driven by an engine is arranged at the position below the muffler. For this reason, it is not possible to simply connect the entire metal tubing serving as a drain line so as to hang down below the muffler in the manner as disclosed in JP-U-H04-24623 described above. For these reasons, it has been desired to install a drain line having excellent heat resistance while taking difficult installation conditions into consideration.

The present invention has been made in view of the above circumstances of the related art and provides a muffler draining apparatus for a working machine which allows a drain line having excellent heat resistance to be reliably installed, even when a device or equipment is present at the position below a muffler.

To this end, according to an embodiment of the present invention, there is provided a muffler draining apparatus for a working machine which is provided in a muffler equipped to the working machine, including a drain line that discharges water accumulated in the muffler to the outside of a vehicle body, in which the drain line includes a single metal tubing whose one end is connected to the muffler, and whose intermediate portion provided continuous to the one end is extended into a space formed between the muffler and a device or equipment located below the muffler, wherein the apparatus further comprises at least one support bracket that is fixed to the muffler, and supports the intermediate portion of the metal tubing.

In the embodiment of the present invention configured as described above, since the drain line includes the single metal tubing connected to the muffler, it is possible to ensure excellent heat resistance to heat radiated from the muffler. Also, the intermediate portion of the metal tubing is extended into the space formed between the muffler and the device or equipment located below the muffler. Thus, the metal tubing can be installed by making effective use of the above-described space that previously has been a dead space, without interfering with the device or equipment. In other words, according to this embodiment, a drain line having excellent heat resistance can be reliably installed even when a device or equipment is present at the position below the muffler.

Also, in cases where the environment in which the working machine is arranged is a cold climate area or the like, a situation can arise in which, under conditions such as when drive of the working machine is stopped, liquid such as water guided to the metal tubing from the muffler freezes within the metal tubing. In such a case, according to this embodiment, since the metal tubing is arranged below the muffler, and this metal tubing can be brought into close proximity to the muffler, when the temperature of the muffler rises due to the high temperature of exhaust gas after the engine is started, the metal tubing can be warmed with the heat radiated from the muffler. This makes it possible to quickly unfreeze the liquid such as water that has frozen within the metal tubing, allowing the metal tubing to recover its function as a drain line at an early stage.

According to an embodiment of the present invention, in the muffler draining apparatus for a working machine according to the above embodiment of the present invention, the intermediate portion of the metal tubing includes at least one linear portion and at least one bent portion.

In the embodiment of the present invention configured as described above, the shape of the intermediate portion of the metal tubing is a combination of the at least one linear portion and the at least one bent portion which are shaped in conformity to the shape of the space formed between the muffler and the device or equipment located below the muffler. Therefore, even when the shape of the above-described space is complex, the metal tubing can be reliably arranged in the above-described space.

According to an embodiment of the present invention, in the muffler draining apparatus for a working machine according to the above embodiment of the present invention, the linear portion is provided at least in a horizontal direction.

In the embodiment of the present invention configured as described above, the linear portion can be arranged in the above-described space relatively easily, even when there is likely to be some constraint on the dimension along the height direction of the space formed between the muffler and the device or equipment located below the muffler.

In the embodiment of the present invention configured as described above, the muffler and the metal tubing are provided integrally via the at least one support bracket. Thus, when vibration due to drive of the working machine is transmitted to the muffler and the metal tubing, the muffler and the metal tubing can be vibrated by the same vibration system. This makes it possible to prevent breakage of the connecting part of the muffler and the metal tubing due to vibration.

According to an embodiment of the present invention, in the muffler draining apparatus for a working machine according to the above embodiment of the present invention, the support bracket is a single support bracket including a vertically extended portion that is attached to a predetermined device and extended in a vertical direction, and a horizontally extended portion that is provided continuous to the vertically extended portion and extended in a horizontal direction, the horizontally extended portion having an opening opposed to a lower part of the muffler, and the muffler draining apparatus further includes at least one holder that is fixed to the support bracket, and holds the intermediate portion of the metal tubing under the horizontally extended portion of the support bracket.

In the embodiment of the present invention configured as described above, the intermediate portion of the metal tubing can be reliably fixed to the support bracket by the at least one holder. In addition, the intermediate portion of the metal tubing can be placed under the opening formed in the horizontally extended portion of the support bracket. Thus, heat radiated from the muffler can be applied to the intermediate portion of the metal tubing through the opening of the horizontally extended portion, thereby warming the metal tubing with reliability.

According to an embodiment of the present invention, in the muffler draining apparatus for a working machine according to the above embodiment of the present invention, the holder includes at least one first clamp that regulates movement of the intermediate portion of the metal tubing in a direction along a radial direction of the muffler, and at least one second clamp that regulates movement of the intermediate portion of the metal tubing in a direction along an axial direction of the muffler.

In the embodiment of the present invention configured as described above, relative movement between the muffler and the metal tubing can be regulated by the at least one first clamp and the at least one second clamp, which contributes to preventing breakage of the connecting part of the muffler and the metal tubing. Also, it is possible to prevent breakage of the metal tubing or the device or equipment due to abutment between the metal tubing and the device or equipment arranged in the vicinity of the metal tubing during driving of the working machine.

According to an embodiment of the present invention, the drain line that discharges water accumulated in the muffler to the outside of the vehicle body includes a single metal tubing whose one end is connected to the muffler, and whose intermediate portion provided continuous to the above-described one end is extended into the space formed between the muffler and a device or equipment located below this muffler. Thus, a drain line having excellent heat resistance can be reliably installed, even when a device or equipment is present at the position below the muffler. Therefore, excellent durability is obtained, thus providing great practical utility. Also, since the metal tubing can be brought into close proximity to the muffler, even when liquid such as water freezes within the metal tubing, the liquid can be unfrozen in a short time with the heat radiated from the muffler. This allows the metal tubing to recover its function as a drain line at an early stage, thereby realizing a highly reliable draining apparatus.

### BRIEF DESCRIPTION OF THE DRAWINGS

Embodiments of the present invention will be described in detail based on the following drawings, wherein:
Fig. 1 is a side view of a hydraulic excavator illustrated as an example of a working machine having a muffler that is provided with a muffler draining apparatus according to an embodiment of the present invention;
Fig. 2 is an enlarged perspective view of the muffler equipped to the hydraulic excavator shown in Fig. 1;
Fig. 3 is a front view showing the muffler draining apparatus according to this embodiment; and
Fig. 4 is a perspective view of the muffler draining apparatus according to this embodiment as seen from below.

### DETAILED DESCRIPTION OF THE INVENTION

Hereinbelow, a muffler draining apparatus for a working machine according to an embodiment of the present invention will be described with reference to the drawings.

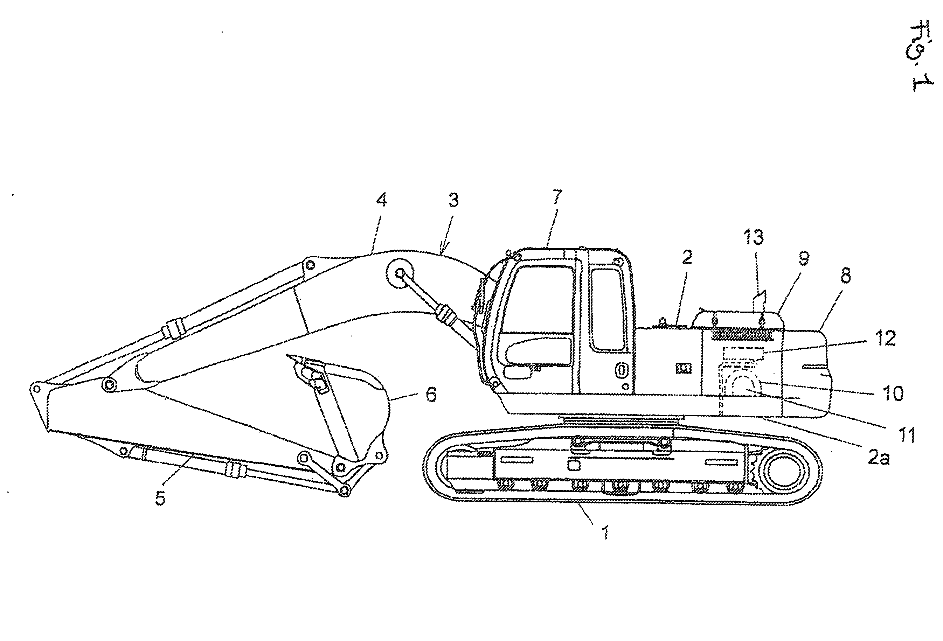

The working machine having a muffler provided with the muffler draining apparatus according to this embodiment is, for example, a hydraulic excavator. As shown in Fig. 1, this hydraulic excavator includes a travelling body 1, a swing body 2 arranged above the travelling body 1, and an attachment 3 that is attached to the swing body 2 so as to be vertically rotatable. The attachment 3 includes a boom 4 rotatably attached to the swing body 2, an arm 5 rotatably attached to the distal end of the boom 4, and a bucket 6 rotatably attached to the distal end of the arm 5 and used for purposes such as excavation of soil or the like. On a swing frame 2a of the swing body 2, a cab 7 is arranged at a position on the front side. A counterweight 8 for ensuring weight balance is arranged at a position on the rear side of the swing body 2. An engine room 9 is arranged on the swing body 2 between the cab 7 and the counterweight 6.

In the engine room 9, in addition to an engine 10 and a hydraulic pump 11 driven by the engine 10, a muffler 12 for reducing the sound of exhaust gas from the engine 10 and the like are arranged. A tail pipe 13 that releases exhaust gas is connected to the muffler 12. The muffler draining apparatus according to this embodiment is attached to the muffler 12 described above.

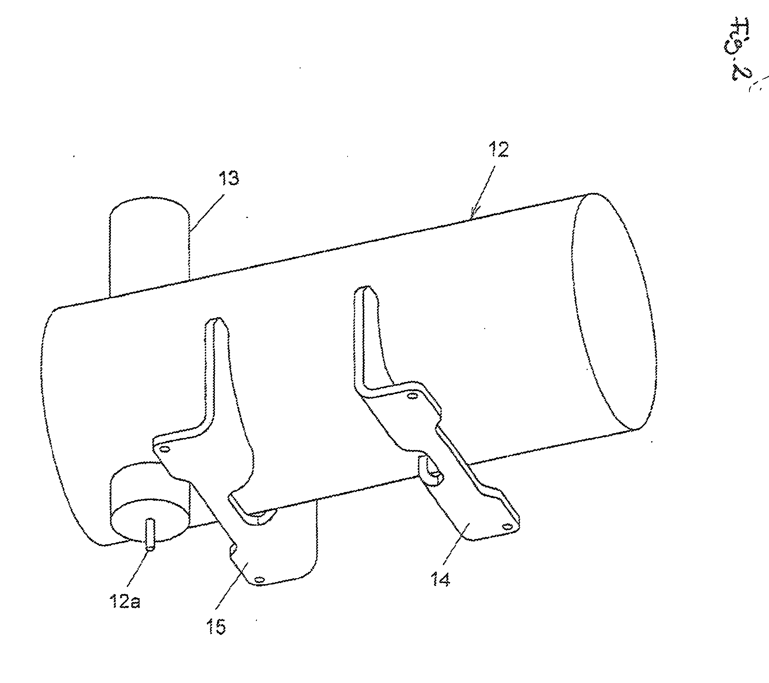

As shown in Fig. 2, the tail pipe 13 described above is connected to an upper part of the muffler 12, and a drain pipe 12a that discharges liquid such as water accumulated at the bottom in the muffler 12 is provided in a lower part of the muffler 12. A pair of fixed brackets 14 and 15 are fixed to the muffler 12. The fixed brackets 14 and 15 are welded onto, for example, the muffler 12.

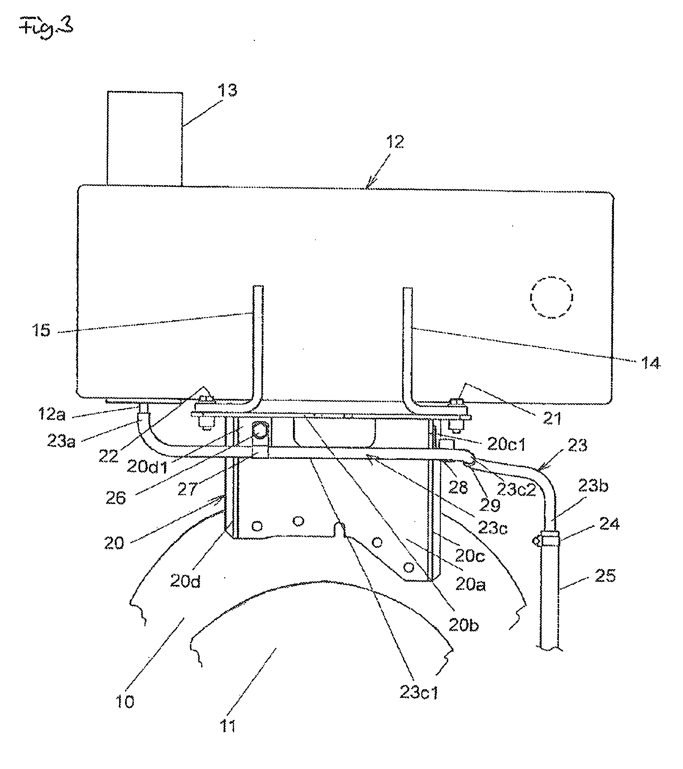

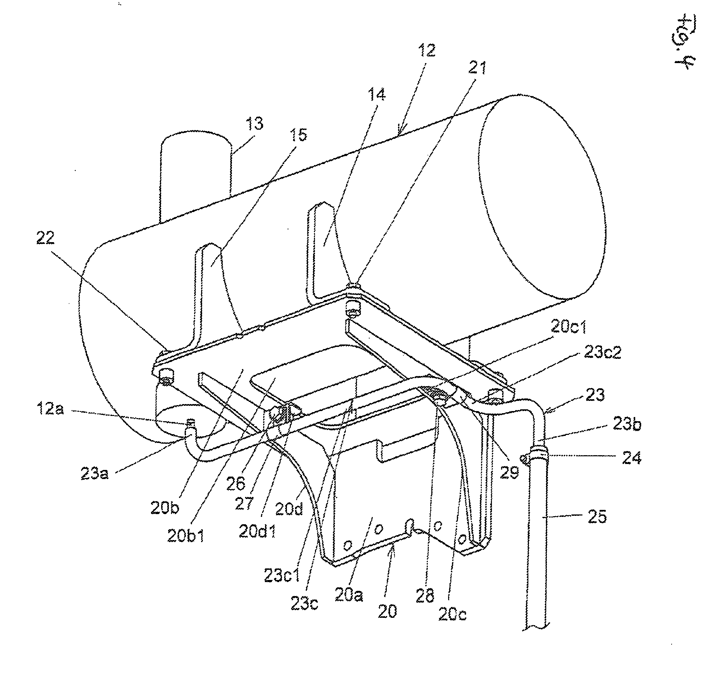

Fig. 3 is a front view showing the muffler draining apparatus according to this embodiment. Fig. 4 is a perspective view of the muffler draining apparatus according to this embodiment as seen from below.

As shown in Figs. 3 and 4, the muffler draining apparatus according to this embodiment is arranged in the portion below the muffler 12. A drain line, which is provided to the muffler draining apparatus according to this embodiment and discharges water accumulated at the bottom of the muffler 12 to the outside of the vehicle body, includes a single pipe-like metal tubing 23 having a circular cross-section, for example, and a single rubber hose 25. The metal tubing 23 has high heat resistance. One end 23a of the metal tubing 23 is connected to the drain pipe 12a of the muffler 12 and an intermediate portion 23c provided continuous to the one end 23a is extended into the space formed between the muffler 12, and a device or equipment located below the muffler 12, for example, the hydraulic pump 11 described above. The rubber hose 25 is arranged at the other end 23b of the metal tubing 23. The rubber hose 25 is connected by a clamp 24 and provided so as to hang down. As shown in Fig. 1, the lower end of the rubber hose 25 opens toward the lower part of the swing frame 2a.

The intermediate portion 23c of the metal tubing 23 includes, for example, a single linear portion 23c1, and plural bent portions 23c2. The linear portion 23c1 and the bent portions 23c2 are shaped so as to avoid interference with a device or equipment disposed in the vicinity. The linear portion 23c1 of the intermediate portion 23c is, for example, arranged in the horizontal plane, and is arranged along the axial direction of the muffler 12. A bent portion is also formed at each of the one end 23a of the metal tubing 23 which is connected to the drain pipe 12a, and the other end 23b of the metal tubing 23 which is connected to the rubber hose 25.

Also, the muffler draining apparatus according to this embodiment includes, for example, a single support bracket 20 that is fixed to the muffler 12, and supports the intermediate portion 23c of the metal tubing 23. The support bracket 20 is made of steel, and fixed to a predetermined device, for example, the engine 10 shown in Fig. 3. The support bracket 20 includes a vertically extended portion 20a and a horizontally extended portion 20b. The vertically extended portion 20a is attached to the engine 10, and is extended in the vertical direction. As shown in Fig. 4, the horizontally extended portion 20b is welded so as to be provided continuous to the vertically extended portion 20a, is extended in the horizontal direction, and has an opening 20b1 opposed to the lower part of the muffler 12. The support bracket 20 also includes a pair of reinforcing ribs 20c and 20d, which are welded to each of the vertically extended portion 20a and the horizontally extended portion 20b, and reinforce the vertically extended portion 20a and the horizontally extended portion 20b. The horizontally extended portion 20b is fastened to the fixed brackets 14 and 15 described above with bolts 21 and 22 or the like. The opening 20b1 of the horizontally extended portion 20b is formed so as to be located directly above the linear portion 23c1 of the intermediate portion 23c of the metal tubing 23.

Also, the muffler draining apparatus according to this embodiment includes at least one holder that holds the intermediate portion 23c of the metal tubing 23, under the horizontally extended portion 20b of the support bracket 20. For example, this holder is made up of a single first clamp 27 and a single second clamp 29. The first clamp 27 holds the linear portion 23c1 of the intermediate portion 23c of the metal tubing 23, and is fastened with a bolt 26 to a protrusion 20d1 provided to the reinforcing rib 20d of the support bracket 20. The second clamp 29 holds the bent portion 23c2 of the intermediate portion 23c of the metal tubing 23, and is fastened with a bolt 28 to a protrusion 20c1 provided to the reinforcing rib 20c of the support bracket 20. The first clamp 27 regulates the movement of the intermediate portion 23c of the metal tubing 23 along the radial direction of the muffler 12. The second clamp 29 regulates the movement of the intermediate portion 23c of the metal tubing 23 along the axial direction of the muffler 12.

In the muffler draining apparatus according to this embodiment configured in this way, liquid such as water accumulated at the bottom of the muffler 12 flows down to the one end 23a of the metal tubing 23 from the drain pipe 12a, and is guided into the intermediate portion 23c. The liquid is then guided into the rubber hose 25 from the other end 23b, flows down within the rubber hose 25, and is discharged to the outside below the swing body 2. This prevents liquid such as water from accumulating in the muffler 12. Thus, mixing of liquid such as water into exhaust gas is minimized. It should be noted that exhaust gas from the engine 1 is sent to the muffler 12, and the sound of the exhaust gas is reduced by the muffler 12. Thereafter, the exhaust gas with mixing of liquid such as water thus minimized is sent from the muffler 12 to the tail pipe 13, and released to the space above the swing body 2 from the tail pipe 13. Therefore, it is possible to prevent the engine room 9 and the like from being contaminated when exhaust gas with liquid such as water mixed therein is released to the outside.

According to this embodiment, since the drain line that discharges liquid such as water accumulated at the bottom of the muffler 12 to the outside of the vehicle body includes the metal tubing 23 connected to the muffler 12, it is possible to ensure excellent heat resistance to heat radiated from the muffler 12. Also, the intermediate portion 23c of the metal tubing 23 is extended into the space formed between the muffler 12 and the hydraulic pump 11 located below the muffler 12. Thus, the metal tubing 23 can be installed by making effective use of the above-described space that previously has been a dead space, without interfering with a device or equipment such as the hydraulic pump 11. In other words, in this embodiment, a drain line having excellent heat resistance can be reliably installed even when a device or equipment such as the hydraulic pump 11 is present below the muffler 12. Therefore, excellent durability is obtained, thus providing great practical utility.

In cases where the environment in which the working machine, in other words, the hydraulic excavator is installed is a cold climate area or the like, a situation can arise in which, under conditions such as when drive of the hydraulic excavator is stopped, liquid such as water guided to the metal tubing 23 from the muffler 12 freezes within the metal tubing 23. In such a case, according to this embodiment, since the metal tubing 23 is installed below the muffler 12, and the metal tubing 23 can be brought into close proximity to the muffler 12, when the temperature of the muffler 12 rises due to the high temperature of exhaust gas after the engine 10 is started, the metal tubing 23 can be warmed with the heat radiated from the muffler 12. This makes it possible to quickly unfreeze the liquid such as water that has frozen within the metal tubing 23, allowing the metal tubing 23 to recover its function as a drain line at an early stage. Thus, a highly reliable draining apparatus can be realized.

Also, according to this embodiment, the intermediate portion 23c of the metal tubing 2 has the linear portion 23c1 that is relatively long. A long discharge path can be thus secured for the water or the like to be discharged by the linear portion 23c1. Accordingly, when, conversely to the above-described case, the temperature of liquid such as water guided to the metal tubing 23 from the muffler 12 is high, the high temperature water or the like can be cooled by the long linear portion 23c1 to reduce its temperature.

Also, according to this embodiment, the shape of the intermediate portion 23c of the metal tubing 23 is a combination of the single linear portion 23c1 and the plural bent portions 23c2 which are shaped in conformity to the shape of the space formed between the muffler 12 and a device or equipment such as the hydraulic pump 11 located below the muffler 12. Therefore, even when the shape of the above-described space is complex, the metal tubing 23 can be reliably arranged in the above-described space.

Also, according to this embodiment, the linear portion 23c1 of the intermediate portion 23c of the metal tubing 23 is provided at least in the horizontal direction. Therefore, the linear portion 23c1 can be arranged in the above-described space relatively easily, even when there is likely to be some constraint on the dimension along the height direction of the space formed between the muffler 12 and a device or equipment such as the hydraulic pump 11 located below the muffler 12.

Also, according to this embodiment, the muffler 12 and the metal tubing 23 are provided integrally via the support bracket 20. Thus, when vibration due to drive of the hydraulic excavator is transmitted to the muffler 12 and the metal tubing 23, the muffler 12 and the metal tubing 23 can be vibrated by the same vibration system. This can prevent breakage of the connecting part of the muffler 12 and the metal tubing 23 due to vibration, which contributes to ensuring excellent durability.

Also, according to this embodiment, the intermediate portion 23c of the metal tubing 23 can be reliably fixed to the support bracket 20 by the first clamp 27 and the second clamp 29, thereby realizing a stable mounting structure for the metal tubing 23. In addition, the intermediate portion 23c of the metal tubing 23 is located under the opening 20b1 formed in the horizontally extended portion 20b of the support bracket 20. Thus, heat radiated from the muffler 12 can be applied to the intermediate portion 23c of the metal tubing 23 through the opening 20b1 of the horizontally extended portion 20b, thereby warming the metal tubing 23 with reliability. Therefore, it is possible to achieve quick unfreezing when liquid such as water freezes within the metal tubing 23.

Also, according to this embodiment, relative movement between the muffler 12 and the metal tubing 23 can be regulated by the first clamp 27 and the second clamp 29 that hold the intermediate portion 23c of the metal tubing 23, which contributes to preventing breakage of the connecting part of the muffler 12 and the metal tubing 23. Also, it is possible to prevent breakage of the metal tubing 23 or a device or equipment such as the hydraulic pump 11 due to abutment between the metal tubing 23 and the device or equipment such as the hydraulic pump 11 arranged in the vicinity of the metal tubing 23 during driving of the hydraulic excavator. These features make it possible to realize a highly reliable draining apparatus.

Also, according to this embodiment, the rubber hose 25 is connected to the metal tubing 23, and the rubber hose 25 is provided so as to hang down. Thus, liquid such as water guided into the metal tubing 23 can be reliably discharged to below the swing body 2 as described above. In addition, since the rubber hose 25 can be arranged at a position far from the muffler 12, it is possible to minimize degradation of the rubber hose 25 due to heat radiated from the muffler 12 whose temperature has become high. Excellent durability can be ensured also in this respect.

In the above-mentioned embodiment, the support bracket 20 that supports the intermediate portion 23c of the metal tubing 23 is formed by a single support bracket that is fastened to the fixed brackets 14 and 15 attached to the muffler 12. However, the present invention is not limited to this configuration. For example, the support bracket may be formed by a single support bracket fastened to the fixed bracket 14, and another support bracket fastened to the fixed bracket 15. In that case, the fixed bracket 14 and one of the support brackets may be formed as an integral structure, and the fixed bracket 15 and the other support bracket may be formed as another integral structure, without fastening these support brackets with the bolts 21 and 22 or the like.

In the above-mentioned embodiment, the intermediate portion 23c of the metal tubing 23 includes the single linear portion 23c1 and the plural bent portions 23c2. However, the present invention is not limited to this configuration. Depending on the shape of the space formed between the muffler 12 and a device or equipment such as the hydraulic pump 11 arranged below the muffler 12, the intermediate portion 23c may include plural linear portions 23c1, or may include a single bent portion 23c2. Also, as the intermediate portion 23c, only a single linear portion 23c1 may be simply provided without providing the bent portions 23c2 or, conversely, only a single or plural bent portions 23c2 may be simply provided without providing the linear portion 23c1.

In the above-mentioned embodiment, the linear portion 23c1 of the intermediate portion 23c of the metal tubing 23 is arranged in the horizontal plane, and is arranged so as to extend along the axial direction of the muffler 12. However, the present invention is not limited to this configuration. For example, the intermediate portion 23c of the metal tubing 23 may be arranged so as to be slanted downwards to the right in Fig. 3, in such a way that the other end 23b side shown in Fig. 3 is located at a position slightly lower than that in the state shown in Fig. 3. Also, the linear portion 23c1 may be arranged in the horizontal plane but arranged in the direction crossing the axial direction of the muffler 12.

In the above-mentioned embodiment, the drain line connected to the drain pipe 12a of the muffler 12 is formed by the metal tubing 23 connected to the drain pipe 12a, and the rubber hose 25 connected to the metal tubing 23. However, the entire drain line may be formed by a metal tubing having high heat resistance.

In the above-mentioned embodiment, the single first clamp 27 and the single second clamp 29 are provided as a holder that holds the metal tubing 23. However, only one of the clamps may be provided, or plural first clamps 27 may be provided, or, alternatively, plural second clamps 29 may be provided.

In the above-mentioned embodiment, the metal tubing 23 has a pipe-like circular cross-section. However, the metal tubing 23 may have a cross-sectional shape that forms a square pipe.

In the above-mentioned embodiment, the muffler draining apparatus is provided in the muffler 12 equipped to a hydraulic excavator. However, the present invention is not limited to providing the muffler draining apparatus in the muffler 12 equipped to a hydraulic excavator. The muffler draining apparatus according to this embodiment may be provided in a muffler provided to another working machine such as a wheel loader.

## Claims

1. A muffler draining apparatus for a working machine which is provided in a muffler (12) equipped to the working machine, comprising:
a drain line that discharges water accumulated in the muffler to the outside of a vehicle body,
wherein the drain line includes a single metal tubing (23) whose one end is connected to the muffler, and whose intermediate portion (23c) provided continuous to the one end (23a) is extended into a space formed between the muffler (12) and a device or equipment located below the muffler,
wherein the apparatus further comprises at least one support bracket (20) that is fixed to the muffler, and supports the intermediate portion of the metal tubing.

2. The muffler draining apparatus for a working machine according to Claim 1, wherein the intermediate portion (23c) of the metal tubing (23) includes at least one linear portion (23c1) and at least one bent portion (23c2).

3. The muffler draining apparatus for a working machine according to Claim 2, wherein the linear portion (23c1) is provided at least in a horizontal direction.

4. The muffler draining apparatus for a working machine according to Claim 1,
wherein: the support bracket (20) is a single support bracket including a vertically extended portion (20a) that is attached to a predetermined device and extended in a vertical direction, and a horizontally extended portion (20b) that is provided continuous to the vertically extended portion and extended in a horizontal direction, the horizontally extended portion having an opening (20b1) opposed to a lower part of the muffler (12); and
the muffler draining apparatus further comprises at least one holder (27, 29) that is fixed to the support bracket, and holds the intermediate portion (23c) of the metal tubing under the horizontally extended portion of the support bracket.

5. The muffler draining apparatus for a working machine according to Claim 4, wherein the holder includes at least one first clamp (27) that regulates movement of the intermediate portion of the metal tubing in a direction along a radial direction of the muffler, and at least one second clamp (29) that regulates movement of the intermediate portion of the metal tubing in a direction along an axial direction of the muffler.

## Patentansprüche

1. Dämpfer-Ablaufvorrichtung für eine Arbeitsmaschine, die in einem Dämpfer (12) vorgesehen ist, mit dem die Arbeitsmaschine ausgestattet ist, umfassend:
eine Ablaufleitung, die in dem Dämpfer angesammeltes Wasser nach außen von einem Aufbau ableitet,
wobei die Ablaufleitung ein einzelnes Metallrohr (23) einschließt, dessen eines Ende mit dem Dämpfer verbunden ist, und dessen Zwischenstück (23c) als Fortsetzung des einen Endes (23a) vorgesehen ist, das sich in einen Raum, der zwischen dem Dämpfer (12) und einem Bauteil oder einer Einrichtung ausgebildet ist, der unter dem Dämpfer angeordnet ist, erstreckt,
wobei die Vorrichtung ferner mindestens einen Konsolträger (20) umfasst, der an dem Dämpfer angebracht ist und das Zwischenstück des Metallrohres stützt.

2. Dämpfer-Ablaufvorrichtung für eine Arbeitsmaschine gemäß Anspruch 1, wobei das Zwischenstück (23c) des Metallrohres (23) mindestens ein lineares Stück (23c1) und mindestens ein gebogenes Stück (23c2) einschließt.

3. Dämpfer-Ablaufvorrichtung für eine Arbeitsmaschine gemäß Anspruch 2, wobei das lineare Stück (23c1) mindestens in einer horizontalen Richtung vorgesehen ist.

4. Dämpfer-Ablaufvorrichtung für eine Arbeitsmaschine gemäß Anspruch 1,
wobei: der Konsolträger (20) ein einzelner Konsolträger ist, der ein sich vertikal erstreckendes Stück (20a) einschließt, das an einem vorbestimmten Bauteil angebracht ist und sich in vertikaler Richtung erstreckt, und ein sich horizontal erstreckendes Stück (20b) als Fortsetzung zu dem sich vertikal erstreckenden Stück vorgesehen ist und sich in horizontaler Richtung erstreckt, wobei das sich horizontal erstreckende Stück eine Öffnung (20b1) gegenüber einem unteren Teil des Dämpfers (12) aufweist, und
die Dämpfer-Ablaufvorrichtung ferner mindestens einen Halter (27, 29) umfasst, der an dem Konsolträger angebracht ist, und der das mittlere Stück (23c) des Metallrohres unter dem sich horizontal erstreckenden Stück des Konsolträgers hält.

5. Dämpfer-Ablaufvorrichtung für eine Arbeitsmaschine gemäß Anspruch 4, wobei der Halter mindestens eine erste Klemme (27) einschliesst, die die Bewegung des mittleren Stücks des Metallrohres in einer Richtung entlang einer radialen Richtung des Dämpfers regelt, und mindestens eine zweite Klemme (29), die die Bewegung des mittleren Stücks des Metallrohres in einer Richtung entlang einer axialen Richtung des Dämpfers regelt.

## Revendications

1. Appareil de drainage de silencieux pour un engin de chantier qui est prévu dans un silencieux (12) monté sur l'engin de chantier, comprenant :
une conduite de drain qui rejette l'eau accumulée dans le silencieux vers l'extérieur d'une carrosserie de véhicule,
dans lequel la conduite de drain comprend un seul tube métallique (23) dont une extrémité est raccordée au silencieux, et dont la portion intermédiaire (23c) prévue de façon continue sur la une extrémité (23a) s'étend dans un espace formé entre le silencieux (12) et un dispositif ou équipement situé sous le silencieux,
dans lequel l'appareil comprend en outre au moins une console de support (20) qui est fixée au silencieux, et supporte la portion intermédiaire du tube métallique.

2. Appareil de drainage de silencieux pour un engin de chantier selon la revendication 1, dans lequel la portion intermédiaire (23c) du tube métallique (23) comprend au moins une portion linéaire (23c1) et au moins une portion courbée (23c2).

3. Appareil de drainage de silencieux pour un engin de chantier selon la revendication 2, dans lequel la portion linéaire (23c1) est agencée au moins dans une direction horizontale.

4. Appareil de drainage de silencieux pour un engin de chantier selon la revendication 1,
dans lequel : la console de support (20) est une seule console de support comprenant une portion s'étendant verticalement (20a) qui est fixée à un dispositif prédéterminé et s'étend dans une direction verticale, et une portion s'étendant horizontalement (20b) qui est prévue en continuité de la portion s'étendant verticalement et s'étend dans une direction horizontale, la portion s'étendant horizontalement ayant une ouverture (20b1) à l'opposé d'une partie inférieure du silencieux (12) ; et
l'appareil de drainage de silencieux comprend en outre au moins un dispositif de maintien (27, 29) qui est fixé à la console de support, et maintient la portion intermédiaire (23c) du tube métallique sous la portion s'étendant horizontalement de la console de support.

5. Appareil de drainage de silencieux pour un engin de chantier selon la revendication 4, dans lequel le dispositif de maintien comprend au moins un premier dispositif de serrage (27) qui régule le mouvement de la portion intermédiaire du tube métallique dans une direction le long d'une direction radiale du silencieux, et au moins un second dispositif de serrage (29) qui régule le mouvement de la portion intermédiaire du tube métallique dans une direction le long d'une direction axiale du silencieux.
